(19)

**Europäisches Patentamt**

**European Patent Office**

**Office européen des brevets**

(11) **EP 4 092 558 A1**

(12) **EUROPEAN PATENT APPLICATION**

(43) Date of publication:
**23.11.2022 Bulletin 2022/47**

(21) Application number: **21305671.6**

(22) Date of filing: **21.05.2021**

(51) International Patent Classification (IPC):
**G06F 30/17** $^{(2020.01)}$ **G06K 9/00** $^{(2022.01)}$
**G06T 17/10** $^{(2006.01)}$

(52) Cooperative Patent Classification (CPC):
**G06F 30/17; G06T 17/10; G06V 20/653;**
G06V 2201/06

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dassault Systèmes**
**78140 Vélizy-Villacoublay (FR)**

(72) Inventor: **BRIFAULT, Lucas**
**78140 Vélizy-Villacoublay (FR)**

(74) Representative: **Bandpay & Greuter**
**30, rue Notre-Dame des Victoires**
**75002 Paris (FR)**

(54) **PARAMETERIZATION OF CAD MODEL**

(57)    The disclosure notably relates to a computed-implemented method for parametrization of a computer-aided design 3D model of a mechanical part including a portion having a distribution of material arranged as a sweep. The sweep has a trajectory and a boundary. The method comprises providing the 3D model, the 3D model including a skin portion representing an outer surface of the portion of the mechanical part, and one or more vector fields, each vector field representing the boundary and/or the trajectory. The method further comprises, for each vector field, determining a distribution of values of a respective parameter of the skin portion by optimizing an objective function which rewards alignment of a gradient of a candidate parameter with the vector field.

EP 4 092 558 A1

**Description**

**TECHNICAL FIELD**

The disclosure relates to the field of computer programs and systems, and more specifically to a method, system and program for parametrization of a computer-aided design (CAD) 3D model of a mechanical part.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

Some of these systems and programs provide functionalities for processing CAD models of mechanical parts.

Levy et al., "Least Squares Conformal Maps for Automatic Texture Atlas Generation", ACM Transactions on Graphics (TOG), 21 (3), 2002, pp. 362-371, presents a quasi-conformal parameterization method, based on a least-squares approximation of the Cauchy-Riemann equations. The so-defined objective function minimizes angle deformations.

Mullen et al., "Spectral Conformal Parameterization", Computer Graphics Forum, Wiley, 2008, 27 (5), 2008, pp. 1487-1494, presents a spectral approach to automatically and efficiently obtain discrete free-boundary conformal parameterizations of triangle mesh patches, without the common artifacts due to positional constraints on vertices and without undue bias introduced by sampling irregularity. High-quality parameterizations are computed through a constrained minimization of a discrete weighted conformal energy by finding the largest eigenvalue/eigenvector of a generalized eigenvalue problem involving sparse, symmetric matrices.

Within this context, there is still a need for an improved solution for processing CAD models of mechanical parts.

**SUMMARY**

It is therefore provided a computed-implemented method for parametrization of a computer-aided design (CAD) 3D model of a mechanical part including a portion having a distribution of material arranged as a sweep. The sweep has a trajectory and a boundary. The method comprises providing the 3D model, the 3D model including a skin portion representing an outer surface of the portion of the mechanical part, and one or more vector fields, each vector field representing the boundary and/or the trajectory. The method further comprises, for each vector field, determining a distribution of values of a respective parameter of the skin portion by optimizing an objective function which rewards alignment of a gradient of a candidate parameter with the vector field.

The method may comprise one or more of the following:

- the objective function rewards the alignment of the gradient of the candidate parameter with the vector field by penalizing a disparity between the gradient of the candidate parameter and the vector field;
- the disparity is a distance between the gradient of the candidate parameter and the vector field, the distance being based on a metric tensor;
- the objective function is of the type:

$$\mathcal{J}(f) = \int_M |df^{\#} - X|_g^2 \, \omega_g$$

where $M$ is the skin portion, $X$ is a vector field, $f$ is the candidate parameter, $df^{\#}$ is the gradient of the candidate parameter, $\omega_g$ is a canonical volume form on the skin portion with respect to the metric tensor $g$, and $\left| df^{\#} - X \right|_g^2$ is the distance between the gradient $df^{\#}$ of the candidate parameter $f$ and the vector field $X$ with respect to the metric tensor $g$;

- the candidate parameter belongs to a space that represents the space:

$$H_*^1(M) = \left\{ \varphi \in H^1(M) \mid \int_M \varphi \, \omega_g = 0 \right\},$$

where $H^1(M)$ is a Sobolev space of weakly differentiable functions on the skin portion $M$;
- the optimizing of the objective function includes finding an approximation of a solution of a Poisson's problem of the type:

$$\begin{cases} \Delta f = \nabla_\alpha X^\alpha & \text{in } M \\ \iota_{df^{\#}}(\omega_g) = \iota_X(\omega_g) & \text{on } \partial M \end{cases}$$

in $H_*^1(M)$, where $\partial M$ designates a boundary of the skin portion $M$, $\nabla_\alpha X^\alpha$ is a divergence of the vector field, $\iota_Y(\omega)$ is the interior product of a n-form $\omega \in \Omega^n(M)$ on $M$ for a vector field $Y \in \Gamma(TM)$, $TM$ being a tangent bundle of $M$, $\Gamma(TM)$ being a set of tangent and smooth vector fields on the skin portion $M$;
- the skin portion is represented by a 3D discrete geometrical representation having discrete elements and the approximation of the solution of the Poisson's problem is in a discrete space representing $H_*^1(M)$;
- the discrete space is of the type

$$V_* = \left\{ f \in V \mid \int_M f \, \omega = 0 \right\},$$

$$V = span \left\{ \varphi_i : M \to \mathbb{R} \mid i \in [\![ 1, n ]\!] \right\},$$

where n is a number of discrete elements of the discrete geometrical representation and each $\varphi_i$ is a continuous piecewise linear function on the skin portion $M$ associated with a discrete element $i$;
- the one or more vector fields comprise several vector fields all aligned with principal curvature directions of the skin portion;
- the distribution of material is arranged as an extrusion and the method further comprises providing an extrusion axis, the one or more vector fields comprising a vector field formed by a cross product between the extrusion axis and a normal to the skin portion;
- the distribution of material is arranged as a revolution and the method further comprises providing a revolution axis, the one or more vector fields comprising a vector field formed by a cross product between a normal to the skin portion and a vector tangent to the skin portion along the trajectory; and/or
- the method further comprises computing a profile of the sweep based on each determined distribution of values.

It is further provided a computer program comprising instructions for performing the method.
It is further provided a computer readable storage medium having recorded thereon the computer program.
It is further provided a system comprising a processor coupled to a memory, the memory having recorded thereon the computer program.

**BRIEF DESCRIPTION OF THE DRAWINGS**

Non-limiting examples will now be described in reference to the accompanying drawings, where:

- FIG.s 1 to 4 illustrate the method;
- FIG. 5 shows an example of a graphical user interface of the system; and
- FIG. 6 shows an example of the system.

## DETAILED DESCRIPTION

It is hereby proposed a computed-implemented method for parametrization of a computer-aided design (CAD) 3D model of a mechanical part. The mechanical part includes a portion which has a distribution of material arranged as a sweep. The sweep has a trajectory and a boundary. The method comprises providing the 3D model, and one or more vector fields. The 3D model includes a skin portion representing an outer surface of the portion of the mechanical part. Each vector field represents the boundary and/or the trajectory. The method further comprises, for each vector field, determining a distribution of values of a respective parameter of the skin portion by optimizing an objective function. The objective function rewards alignment of a gradient of a candidate parameter with the vector field.

This constitutes an improved solution for processing a CAD 3D model of a mechanical part or a portion thereof. Notably, the method provides a parametrization of a skin portion of the CAD model which represents an outer surface of a portion of the mechanical part having a distribution of material arranged as a sweep. In other words, the method allows to parameterize sweeps in a mechanical part. By "providing a parametrization of a skin portion" it is meant determining a distribution of values of one or more (e.g., two) respective parameters on the skin portion, the one or more parameters describing the geometry and/or topology of the skin portion. Parameterizing a sweep is particularly relevant in the field of manufacturing CAD, as explained hereinafter.

Furthermore, not only does the method allow to parameterize a sweep, but the parameterization that the method provides is natural, i.e. optimal with respect to natural directions of the sweep. Indeed, the method provides as input one or more vector fields each representing the boundary of the sweep and/or the trajectory of the sweep, *i.e.* the one or more vector fields form one or more vector fields of the natural directions of the sweep. A natural direction of the sweep is a direction of its trajectory or a curvature of its boundary, *e.g.* a direction of a profile curve of the sweep or of a guide curve of the sweep. For example, the one or more vector fields may be aligned with principal curvature directions of the skin portion. Then, for each vector field, the method determines a distribution of values of a respective parameter by optimizing an objective function rewarding alignment of a gradient of a candidate parameter (*i.e.* a candidate solution to the optimization) with the vector field. Thereby, each distribution of values of a respective parameter that is determined by the method, *i.e.* that results from this optimization rewarding gradient alignment with the vector field, has a gradient that tends to be aligned with a respective vector field. Thus, the determined distributions of values altogether follow the natural directions of the sweep that are represented by the input one or more vector fields. In other words, the method provides a parameterization that follows the natural directions of the sweep. For example, the determined distributions of values may altogether form an arclength parameterization of the sweep where each parameter grows with arclength along a natural direction. In examples where the portion is of a cylindrical shape, and the skin portion represents an outer surface of the portion (i.e., a cylindrical surface), the determined distributions of values of one or more parameters may be distributions of values of one or more cylindrical coordinates which are growing along directions (i.e., axes) of a respective cylindrical coordinate system. Such a parameterization provides the most natural interpretation of a cylindrical surface. The method allows to obtain such natural parametrizations for general sweeps with more complicated profile/guide curves. This natural parameterization obtained by the method is particularly relevant in manufacturing CAD. Indeed, this parameterization facilitates the determination of a profile curve and/or of a guide curve of the sweep, which ultimately allows to describe the sweep with its profile and/or guide curve, for example as a CAD sweep feature in a feature-tree construction context, which is discussed hereinafter. This parameterization also facilitates edition of the sweep in view of the manufacturing of the corresponding portion of the mechanical part, as this natural parameterization follows directions which are relevant for manufacturing a material arranged as a sweep. This facilitates edition in view of manufacturing requirements.

Moreover, the parameterization of the sweep through the optimization that the method performs forms an improved solution to obtain a parametrization of a sweep by making the parametrization robust to noise and incomplete surfaces. In other words, the CAD model may be a noisy CAD model (e.g. featuring a noise due to outlier points, notably when the 3D model is a 3D point cloud, or due to the non-smoothness of the outer surface of the CAD model, notably when the 3D model is a 3D mesh), or the CAD model may comprise one or more incomplete surfaces (*e.g.* one or more surfaces with holes). Indeed, the optimization rewards global gradient alignment of a candidate parameter with a respective vector field (*e.g.* the objective function may be an integral quantity), and thus tends to be less sensitive to local noise or holes.

As previously mentioned, parametrization of a CAD 3D model, or of at least a part thereof such as a skin portion thereof, is particularly relevant in the field of manufacturing CAD, that is, for software solutions to assist design processes and manufacturing processes, whereby the objective is to produce a physical product corresponding to a designed CAD 3D model. Within this context, the CAD 3D model represents a manufacturing product, that may be manufactured downstream to its design. The method may thus be part of such a design and/or manufacturing process. The method may for example form or be part of a step of CAD feature obtention from a provided CAD 3D model. A CAD feature is a parametric and shape description of a space region with particular geometric or topological properties. When the space region is a sweep, the CAD feature is a sweep CAD feature. In general, a provided CAD model may not comprise related data of the underlying CAD features of the model and the process of CAD feature obtention from a provided CAD 3D model comprises obtaining one or more CAD features (e.g., one or more of extrusion features, revolution features, fillet features, or sweep features) such that the provided CAD 3D model may be described by the application of the one or more CAD features. Within such design and/or manufacturing process, the step of CAD feature obtention may include a parameterization of geometries (*i.e.* portions, such as skin portions) of the CAD 3D model with respective CAD features. For example, the step of CAD feature obtention may be or be part of a step of feature-tree construction. Within this step of CAD feature obtention, the method parametrizes at least a part of a CAD model, *i.e.* the skin portion, e.g. and other methods may parametrize other portions, *e.g.* skin portions. The method may thereby yield a sweep CAD feature for representing the skin portion, *e.g.* in a feature-tree. It is to be understood that the method may be repeated, thereby yielding several sweep CAD features (e.g. at different locations of the CAD 3D model). The parameterization facilitates the manipulation/edition of the CAD model. Notably, the parameterization of a sweep that the method facilitates edition of the sweep. The step of CAD feature obtention which includes the method may be followed by further design and/or manufacturing steps which use parameterized CAD features, and notably the parameterized sweep(s) obtained by the method. These further steps may include further design and/or editions actions, tests, simulations and/or manufacturing. The method may in other words be included in a manufacturing CAD process, at a step where the CAD model is adapted for use in subsequent steps of the manufacturing CAD process (e.g., further design/edit actions, tests, simulations and/or manufacturing). The method may be included in many other applications which use the CAD models parametrized by the method.

The method thus improves the parametrization of a skin portion in a CAD 3D model, which for example allows to prepare it in view of the manufacturing. For example, the skin portion parametrized by the method may be edited in view of features of a downstream manufacturing process (e.g., molding, machining, additive manufacturing). This facilitates preparation and/or set up of the manufacturing machine(s) (e.g., a mold, a machining tool, or a 3D printer). Thus, the method improves the manufacturing of a product represented by the CAD model and increases productivity of the manufacturing process.

Thus, the method is used to parameterize a CAD model or at least a part thereof. A parameterized CAD 3D model or at least a part thereof allows an easy manipulation and/or editability and/or efficient storage in memory, as opposed to non-parameterized 3D models such as discrete representations (e.g., point clouds, meshes, or voxel representations). For example, the skin portion, once parameterized by the method, may be fitted with canonical primitives (e.g., parallelepipeds or cylinders) or parameterized with other adapted geometrical tools, e.g., with non-canonical parameterized surfaces such as NURBS. In any application of the method, including those discussed hereinafter, the CAD 3D model may be a measured CAD 3D model (i.e., a CAD model obtained from physical measurements on the mechanical part as discussed hereinbelow). In such a case, parametrizing a skin portion of the CAD 3D model allows to process the (raw) measured CAD 3D model and allows to ultimately edit the measured CAD 3D model (i.e., once a parametrization obtained). The method may thereby generally be used to parametrize a skin portion on a measured portion of the mechanical part and then process it into an editable data structure.

As previously explained, the method parametrizes portions of a mechanical part having a distribution of material arranged as a sweep. A respective portion of a mechanical part having a distribution of material arranged as sweep is a portion which is coherent from the point of view of the manufacturing. In other words, the corresponding portion of the mechanical part, in the real-world, has a respective geometry requiring or adapted to a respective manufacturing process (e.g., molding, additive manufacturing or machining), for example corresponding to a preferred (*e.g.* with respect to manufacturing constraints) machining path or preferred (*e.g.* with respect to manufacturing constraints) characteristics of a mold. The manufacturing set up of the mechanical part may in all these examples be determined by profile and/or guide curves of the sweep, which the method allows to infer based on the parameterization that the method provides. The method may thereby be included in a manufacturing CAD process comprising a step of setting up the manufacturing process based on profile and/or guide curves of the sweep obtained based on the parameterization of the sweep that the method provides, where the method may comprise obtaining the profile and/or guide curves of the sweep.

In examples, the mechanical part may be a molded part, and the portion may be manufactured by molding. The sweep may in these examples be an extrusion. The parameterization of the skin portion representing the portion allows in such case the application of a draft operator to the parameterized skin portion, which is in these examples a parameterized extrusion surface (e.g., by computing a profile of the extrusion using the parametrization). In other words, the parameterization provided by the method allows to recover the profile curve of the extrusion and from there a draft operator may easily be built. As known per se from manufacturing CAD, draft operators are applicable to extrusion features, and the application of a draft operator allows to confer to the extrusion surface a conical shape by defining a draft angle with respect to the extrusion axis. During the molding process of the corresponding portion, which inherits

**EP 4 092 558 A1**

this conical shape obtained during the design, the conical shape eases the withdrawal of the portion from the mold (i.e., the demolding/unmolding). For a general sweep, the parameterization of the skin portion representing the portion allows determination of a profile curve and/or of a guide curve of the sweep as discussed above. This ultimately allows defining and application of other operators on the parameterized skin portion upon which the shape of the skin portion is particularly suitable for molding. The method may thereby be included in a manufacturing CAD process of design and/or manufacturing of a molded part, comprising edition steps downstream to the parametrization performed by the method. The edition steps may include the application of a draft operator to the skin portion parametrized by the method to meet constraints of the corresponding mold of the downstream molding process, thereby easing the unmolding/demolding/withdrawal of the molded portion. More generally, when the sweep is a general sweep (i.e. not necessarily an extrusion), the edition step may include any edition of the sweep based on its parameterization provided by the method in order for the skin portion of the CAD 3D modeled object to meet constraints of the mold. In other words, for general sweeps, as for extrusions, recovering the curves of interest with high fidelity, which the parameterization obtained by the method enables, allows to define operators upon it that will make it suitable for molding.

In examples, the mechanical part and the portion thereof may be manufactured by additive manufacturing. The parameterization of the skin portion allows in such case the definition of a printing path along natural directions of the sweep, for example the trajectory of the sweep (or one of the guide/profile curve(s) when the sweep involved in the method is defined by the one or more profiles and/or one or more guide curves). The method may thereby be included in a manufacturing CAD process of design and/or manufacturing of a mechanical part manufactured by additive manufacturing. The process may include a step of defining a printing path along the trajectory of the sweep, based on the parameterization of the skin portion obtained by the method. The process may further include defining a set of up of a 3D printer carrying out the additive manufacturing in accordance with the defined printing path.

In examples, the mechanical part may be a machined part, and the portion may be manufactured by machining (e.g., cutting). The parameterization of the skin portion allows in such case the definition of a path of the machining tool (e.g., cutting tool) along the natural directions of parametrization determined by the method, e.g. for cutting material along these directions. As previously explained, the method may comprise obtaining profile and/or guide curves of the sweep, which form natural curves for a machining tool, *i.e.* the machining tool is configured to be more efficient when working along these curves, *e.g.* the machining being faster and/or more accurate along these curves. For example, when the sweep is an extrusion, the machining tool may be configured to cut material along the profile curve of the extrusion. The method may thereby be included in a manufacturing CAD process of design and/or manufacturing of a mechanical part manufactured by machining. The process may include a step of defining a path of a machining tool along natural directions and based on the parameterization obtained by the method. The process may further include defining a set of up of the machining tool carrying out the machining in accordance with the defined path.

Use of the parametrization by the method in manufacturing CAD has been discussed. Other applications, which may be in the manufacturing CAD context or in other contexts, are now discussed.

In a first application, the parametrization of a skin portion of a CAD model obtained by the method may be used for B-rep construction. B-rep construction is discussed in references P. Benko et al., "Algorithm for reverse engineering boundary representation models", Computer-Aided Design, 33, 2001, pp. 839-851, in A. Tumanin, "Polygonal Mesh to B-Rep Solid Conversion: Algorithm Details and C++ Code Samples", posted on September 4, 2019 on the Habr.com website, and in Bénière et al., "Recovering Primitives in 3D CAD meshes", Proceedings of SPIE, 2011, which are all incorporated herein by reference. As known per se B-rep is a collection of connected bounded surface elements (for example under the STEP file format, as widely known). The B-rep construction may comprise fitting surfaces onto the skin portions parametrized by the method, and bound the surfaces (i.e., determine the B-Rep's topological data, that is, the "is bounded by" relationships) using a respective parametrization obtained by the method. According to this first application, the parametrization method may be included in a computer-implemented process for converting a CAD 3D model representing a mechanical part into a boundary representation.

In a second application, a parametrization obtained by the method may be used for feature-tree construction. This second application comprises using the obtained parametrization to construct a feature-tree representation of the CAD 3D model. The feature-tree construction may indeed comprise an application of the method on one or more portions of the mechanical part in order to obtain one or more respective parametrization of one or more skin portions. The feature-tree construction may then add each parameterized skin portion to the feature-tree. The parametrization method may thus be included in a computer-implemented process for constructing a feature-tree from a CAD 3D model representing a mechanical part. The feature-tree construction process may comprise:

- one or more applications of the method, each application yielding a distribution of values of a parametrization for a skin portion of a CAD model, the skin portion representing a distribution of material arranged as a sweep;
- defining, for each parameterized skin portion a corresponding sweep CAD feature based on the parameterization, and optionally, parameterizing each respective other geometry as a corresponding CAD feature; and
- including each parameterized CAD feature into the feature-tree of the mechanical part.

In a third application, a distribution of values of a respective parameter obtained by the method is used for re-meshing (e.g., if the provided CAD 3D model is a 3D mesh) or re-sampling (e.g., if the provided CAD 3D model is a 3D point cloud). According to the third application, the skin portion may be parameterized as explained above, and this allows the re-meshing or re-sampling of the CAD 3D model. This re-meshing/re-sampling may be used to denoise (e.g., remove outlier points, notably for a 3D point cloud, or smooth the outer surface of the CAD model, notably for a 3D mesh) the CAD 3D model. Additionally or alternatively, it may be used to tessellate efficiently 3D meshes, i.e., to adapt the size of the mesh's faces to the curvature of the corresponding surfaces in order to minimize the number of faces thereby optimizing the mesh's weight (i.e., storage-wise) while ensuring an optimal discretization distance to the exact surfaces. For example, the re-meshing/re-sampling is used to minimize the mesh's weight while ensuring a sufficiently small distance to the exact surface (e.g., in which case the closeness to the surface is seen as a constraint and not something to optimize). Thus, the method forms an improved solution for adapting the mesh as allows an adaptation procedure on a 2D flat parametric space instead of more complex application of mesh processing operation, and surface fitting on the skin portion. The parametrization method may thus be included in a computer-implemented process for re-meshing (resp. re-sampling) a CAD 3D model that is a 3D mesh (resp. a 3D point cloud) representing a mechanical part.

In a fourth application, a distribution of values of one or more respective parameters obtained by the method may be used for texture mapping of the CAD model, also referred to as "texturing". Texturing designates the process of pasting an image on the CAD model with a minimal amount of deformation of the image. The method may in this application provide a parameterization that includes two parameters, which allows to provide a correspondence with the pixels of the image. The texturing may comprise pasting the image based on the parameterization, for example by fitting the image onto profile and/or guiding curves obtained based on the parameterization provided by the method. This fourth application may comprise using the obtained parametrization to compute a 2D projection of a skin portion of the CAD 3D model, for example by computing a UV mapping as known in the field of computer graphics. Additionally, the parametrization may be used to minimize deformation of the mapping. The method may thus be included in a computer-implemented process for texture mapping in a CAD model.

A distribution of values of one or more respective parameters obtained by the method may be used in other applications, for example 3D deformation, 3D rendering (geometric/material attributes computation, occlusion culling, shadows determination), 3D animation and/or shape compression. In particular, parametrizing 3D CAD models of mechanical parts by parametrizing portions of the mechanical parts each arranged as a sweep allows adaptivity and a high amount of compression. The adaptivity enabled by the method allows generating an ad hoc mesh with variable sizes of faces (e.g., triangles/quads) from the parameterized CAD model. In examples when machining and/or rendering is performed in real time, the generated mesh may be light in term of memory footprint with large size of faces to improve the real-time performance. In other examples, when the machining tools are of high precision and/or for rendering of high quality, the generated mesh may be a mesh with small size of faces (e.g., triangles having an edge length of 1mm), generated from the same parameterized CAD model. Parameterizing as does the method enables an efficient storage of the CAD model, notably by avoiding storing a really precise version of the mesh which has a high memory footprint. These applications are discussed in reference Kaiser A. et al., "A survey of Simple Geometric Primitives Detection Methods for Captured 3D data", Computer Graphics Forum, 2018, which is incorporated herein by reference.

The method generally manipulates modeled objects, such as the CAD 3D model. A modeled object is any object defined by data stored e.g., in the database. By extension, the expression "modeled object" designates the data itself. According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems.

In the context of CAD, a modeled object may typically be a 3D modeled object or 3D model, e.g., representing a product such as a part or an assembly of parts, or possibly an assembly of products. By "3D modeled object" or "3D model", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e., increases the speed at which designers statistically accomplish their task). This speeds up the manufacturing process in the industry, as the design of the products is part of the manufacturing process.

The 3D modeled object or 3D model may represent the geometry of a product to be manufactured in the real world subsequent to the completion of its virtual design with for instance a CAD software solution or CAD system, such as a (e.g., mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD software solution allows the design of products in various and unlimited industrial fields, including: aerospace, architecture, construction, consumer goods, high-tech devices, industrial equipment, transportation, marine, and/or offshore oil/gas production or transportation. The 3D modeled object may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

The 3D model may form a discrete geometrical representation of a 3D real-world object, e.g., representing an object from the real world such as a mechanical part. The discrete geometrical representation is a data structure which comprises a discrete set of pieces of data. Each piece of data may be equivalently referred to as a discrete element. Each piece of data represents a respective geometrical entity positioned in a 3D space. Each geometrical entity represents a respective location of the 3D object (in other words, a respective portion of material constitutive of a solid represented by the 3D object). The aggregation (i.e., union or juxtaposition) of the geometrical entities represents altogether the 3D object. The discrete geometrical representation may in examples comprise a number of such pieces of data higher than 100, 1000, or 10000.

The discrete geometrical representation may for example be a 3D point cloud, each geometrical entity being a point. The discrete geometrical representation may alternatively be a 3D mesh, each geometrical entity being a mesh tile or face. The 3D mesh may be regular or irregular (i.e., consisting or not of faces of a same type). The 3D mesh may be a polygonal mesh, for example a triangular mesh. The 3D mesh may be obtained from a 3D point cloud, for example by triangulating the 3D point cloud (e.g., with a Delaunay triangulation).

The 3D point cloud or 3D mesh may be determined from physical measurements on a real object, for example within a reconstruction process. The 3D reconstruction process may comprise providing the real object, providing one or more physical sensors each configured for acquiring a respective physical signal, and acquiring one or more respective physical signals by operating the one or more physical sensors on the real object (i.e., scanning the real object with each sensor). The 3D reconstruction may then automatically determine a 3D point cloud and/or a 3D mesh based on the measurements, according to any known technique. The one or more sensors may comprise a plurality of (e.g., RGB, and/or image or video) cameras and the determination may comprise a structure-from-motion analysis. The one or more sensors may alternatively or additionally comprise one or more depth sensors (e.g., on an RGB-depth camera) and the determination may comprise a 3D reconstruction from depth data. The one or more depth sensors may for example comprise a laser (e.g., a lidar) or an ultrasound emitter-receiver.

The 3D point cloud or 3D mesh may alternatively be obtained from a 3D modeled object representing a skin (i.e., outer surface) of a solid or mechanical part for example by ray casting on the 3D modeled object or tessellating the 3D modeled object. The tessellating may be performed according to any 3D modeled object rendering process. Such a rendering process may be coded on any CAD system in order to display a graphical representation of the 3D modeled object. The 3D modeled object may be designed or have been designed by a user with a CAD system.

A CAD system may be history-based. In this case, a modeled object is further defined by data comprising a history of geometrical features. A modeled object may indeed be designed by a physical person (i.e., the designer/user) using standard modeling features (e.g., extrude, revolute, cut, and/or round) and/or standard surfacing features (e.g., sweep, blend, loft, fill, deform, and/or smoothing). Many CAD systems supporting such modeling functions are history-based system. This means that the creation history of design features is typically saved through an acyclic data flow linking the said geometrical features together through input and output links. The history of the part is the design intent. Basically, the history gathers the information on the operations which the modeled object has undergone, thereby enabling design changes of the part according to the design intent. The history based modeling paradigm may be realized according to any of known methods in the art.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values. For example, a PLM system may manage fabrication tolerances, for example, in machining or molding regarding a provided feature in a CAD model.

By CAM solution, it is additionally meant any solution, software of hardware, adapted for managing the manufacturing data of a product. The manufacturing data generally includes data related to the product to manufacture, the manufacturing process and the required resources. A CAM solution is used to plan and optimize the whole manufacturing process of a product. For instance, it can provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with one or more features in a CAD model. Such CAM solutions are provided by Dassault Systèmes under the trademark DELMIA®.

By CAE solution, it is additionally meant any solution, software of hardware, adapted for the analysis of the physical behavior of a modeled object. A well-known and widely used CAE technique is the Finite Element Method (FEM) which typically involves a division of a modeled object into elements which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, salespeople and buyers. A PDM solution is generally based on a product-oriented database. It allows the actors to share consistent data on their products and therefore prevents actors from using divergent data. Such PDM solutions are provided by Dassault Systèmes under the trademark ENOVIA®.

The method comprises providing the CAD 3D model of the mechanical part including a portion having a distribution of material arranged as a sweep. The CAD 3D model includes a skin portion representing an outer surface of the portion of the mechanical part. The portion of the mechanical part may be a strict portion of the mechanical part, which then comprises other portions. The method determines a distribution of values of one or more respective parameters of the skin portion. The method may be iterated, i.e., applied to one or more other portions of the mechanical part, each having a distribution of material arranged as a sweep. Each application of the method to a respective other portion determines a distribution of values of a parameter of a skin portion representing an outer surface of this respective other portion. Thereby the method may parametrize several sweep portions of the mechanical part, e.g., all sweep portions. Alternatively, the portion of the mechanical part may be the mechanical part itself, and in this case the method determines a parametrization of the outer surface of the mechanical part itself arranged as a sweep. The portion of the mechanical part may be created by a machining process, an additive manufacturing process and/or molding.

The method may comprise prior to providing the CAD 3D model, performing a method of segmentation. The method of segmentation may provide one or more segments of the CAD 3D model. The skin portion may comprise or consist of one or more segments of the CAD 3D model obtained in the segmentation process. Alternatively or additionally, the method may be preceded by a step of sweep detection, that is detecting if the distribution of material of the mechanical part or an outer surface thereof is arranged as a sweep.

As discussed above, the providing of the CAD 3D model may comprise measuring or acquiring the CAD 3D model, e.g., by providing physical sensors and operating them on the mechanical part (e.g., this may for example consist in scanning the mechanical part), and then performing a 3D reconstruction process to obtain the 3D model. Alternatively, the providing of the 3D model may comprise creating the 3D model, e.g., by sketching it. In yet another alternative, the providing of the 3D model may comprise retrieving the 3D model from a (e.g., distant) database on which the 3D model has been stored further to its creation or acquirement.

By "outer surface" it is meant a surface in contact with a medium other than the mechanical part, e.g., another mechanical part or air. In other words, the outer surface forms a delimitation between the outside of the mechanical part and the inside of the mechanical part at the portion. By "skin portion", it is meant any surface representation (open surface or closed surface) of the outer surface (or "skin") of the portion of the mechanical part. The skin portion may represent at least a part of a boundary (i.e., surface) of the respective 3D model, said at least a part of the boundary representing the outer surface. In other words, skin portion is a part of the provided 3D model of the mechanical part corresponding to the outer surface of the mechanical part. In yet other words, while the CAD 3D model altogether represents the mechanical part, the skin portion is a part of the CAD 3D model that represents the outer surface of the portion of the mechanical part. The skin portion may be a strict portion of the boundary of the provided CAD 3D model, in the case where the portion is a strict portion of the mechanical part. The 3D model comprises in this case other portions each representing another respective portion of the mechanical part. Alternatively, the skin portion may be the outer boundary of the CAD 3D model, in the case where the portion is the mechanical part itself.

The portion represented by the outer surface as a distribution of material is arranged as a sweep. By "a portion having a distribution of material arranged as a sweep" it is meant that the material of the portion is distributed in a 3D space in form of a sweep. By "a sweep", it is meant an object or a surface thereof defined by a trajectory and a boundary resulting from sliding and/or rotating a profile along a respective 3D curve. The trajectory of a sweep is a general direction of the sweep. The trajectory may be represented by the respective 3D curve. The 3D curve may be equivalently referred to as the guide curve. The boundary of a sweep is an outer surface of the sweep and may be equivalently referred to as contour or contour line of the sweep. The boundary of the sweep may be defined by sliding a boundary of the profile along the trajectory. The profile of the sweep may be formed according to a respective profile curve. In other words, the profile curve may define the boundary of the profile. Thus, the boundary of the sweep may be formed by sliding the profile curve along the guide curve and/or rotating the profile curve along the guide curve. The rotating in the sweep may be defined according to a respective spine curve. The sweep may be an extrusion. As known *per se,* in an extrusion the guide curve is a straight axis and also referred to as the axis of extrusion. The sweep may alternatively be a revolution. As known per se, in a revolution the guide curve is at least a part of a circle. The sweep may yet alternatively be a fillet. As known per se, a fillet feature is obtained by reduction of a sweep with a circular profile curve from a CAD 3D model (i.e. only a part of the boundary of the sweep with circular profile is visible).

The method parametrizes the CAD 3D model by parameterizing a skin portion thereof. As discussed above, this means that the method determines one or more distributions of values of a respective parameter of the skin portion (*i.e.* each distribution is respective to a respective parameter). In the case of the method, the method determines a respective distribution of values of a respective parameter for one vector field of the one or more vector fields. In other words, for each vector field, the method attributes, to each location of the skin portion (e.g., a vertex of a 3D mesh when the provided skin portion is represented by the 3D mesh, or a point of a point cloud when the provided skin portion is represented by the point cloud), a value of the corresponding respective parameter. In examples, the one or more vector fields comprise two vector fields, and the method determines a 2D parameterization of the skin portion. By determining a "2D parametrization" it is meant that the method determines two distributions of values, i.e. for two parameters (one parameter for each of the two provided vector fields) on the skin portion. In other words, in these examples, the method determines two parameters for each location of the skin portion. In other examples, the one or more vector fields consist in a single vector field, and the method determines a single distribution of values of a parameter for this single vector field.

For parameterizing the CAD 3D model, the method determines a distribution of values of a respective parameter of the skin portion by an optimization. Prior to that, the method comprises providing inputs to the optimization. The providing of the inputs comprises the providing of the 3D model and providing one or more vector fields. Each vector field represents the boundary and/or the trajectory of the sweep. By "each vector field representing the boundary and/or the trajectory" it is meant that each vector field, i.e., a set of vectors in a 3D space, represent the trajectory and/or the boundary. For example, the vector field may represent the trajectory and/or the boundary by streamlines defined according to the vector field. A streamline defined according to a vector field, as known for example *per se* in the fields of fluid mechanics and computer graphics, is a curve being tangent to the vector field at every point of the curve. The one or more vector fields may altogether represent the boundary (also referred to as "contour") and the trajectory of the sweep, thereby representing the sweep. The one or more respective parameters, each determined for a respective vector field, may thus form a full parametrization of the skin portion. Each of the one or more vector fields may belong to a set of tangent vector fields defined on the skin portion and may optionally be smooth. In examples, the one or more vector fields comprise several vector fields all aligned with principal curvature directions of the skin portion. The principal directions are directions of principal curvature as known *per se* in the field of differential geometry. In these examples, the providing of the vector fields may comprise obtaining the vector fields. This may comprise computing the vector fields whose directions follow in an optimal way the principal directions of curvature of the skin portion.

Further to the providing of the inputs, the method then determines the distribution of values of the respective parameter by optimizing an objective function. The objective function rewards alignment of a gradient of a candidate parameter (*i.e.* a free variable of the optimization) with the vector field in that the objective function tends to have a high value when the gradient of a candidate parameter is far (i.e., unaligned) to the vector field. Thereby, optimizing the objective function is minimizing the objective function, or equivalently maximizing the alignment of a gradient of a candidate parameter with the vector field. In examples, the optimizing of the objective function consists in minimizing the objective function. The rewarding, i.e., enforcing the gradient of the parameter to be aligned with the vector field, may be incorporated in the objective function in form of an integral of a measure of non-alignment of the gradient of a candidate parameter and the vector field. The candidate parameter may be represented as a distribution of values on the skin portion and the optimization may explore (e.g., iteratively) the value of the objective function for several distributions of values (*i.e.* corresponding to several candidate parameters).

The determined distribution of values forms a parameterization of the sweep. Further to the determination of this parameterization, the method may optionally comprises creating a sweep feature corresponding to the distribution of values of one or more respective parameters. The method may further optionally comprise saving/storing the created sweep CAD feature. The saved/stored feature may later be used in a feature-tree creation/obtention process. The feature-tree creation process may integrate the created sweep CAD feature into a feature-tree of the CAD 3D model.

The objective function may reward the alignment of the gradient of the candidate parameter with the vector field by penalizing a disparity between the gradient of the candidate parameter and the vector field. The disparity represents a difference between the gradient of the candidate parameter and the vector field. The disparity may be a distance between the gradient of the parameter and the vector field. The distance may be defined based on a metric tensor as known *per se* from differential geometry. The metric tensor may be any metric tensor in the field of differential geometry that is suitable to define a distance.

The objective function may be of the type:

$$\mathcal{J}(f) = \int_M |df^{\#} - X|_g^2 \, \omega_g$$

where $M$ is the skin portion (seen as an oriented Riemannian manifold), $X$ is a vector field, $f$ is the candidate parameter, $df^{\#}$ is the gradient of the candidate parameter, $\omega_g$ is in $\Omega^d(M)$ and is a canonical volume form on the skin portion with respect to the metric tensor $g$, and $|df^{\#} - X|_g^2$ is the distance between the gradient $df^{\#}$ of the candidate parameter $f$ and the vector field $X$ with respect to the metric tensor $g$. By "the distance being with respect to the metric tensor $g$" it

is meant that $|\cdot|_g^2 = g(\cdot, \cdot)$. Here, $\Omega^d(M)$ is the space of $d$-differential forms on $M$. $\Omega^d(M)$ is a vector space. As known per se, a volume form on a n-dimensional manifold $M$ is a $n$-differential form that is non-degenerate, i.e., nowhere zero ($\omega_{|p} \neq 0 \; \forall p \in M$). The canonical volume form $\omega_g$ of $M$ is the only volume form that agrees with the metric tensor $g$ and the orientation of $M$ and can be written in coordinates:

$$\omega_g = \sqrt{\det G} \; dx^1 \wedge \cdots \wedge dx^n$$

where G is the matrix of components $G_{ij} = g(\partial_x i, \partial_{xj})$ of $g$ in the chosen chart $(U, x)$. For each oriented Riemannian manifold $(M, g)$ there is a unique natural volume form (sometimes called the Riemannian volume form). Integration operations are performed with respect to this unique natural volume form. As discussed above, for each vector field, $X$ denotes each of the vector fields and belongs to $\Gamma(TM)$ where $TM$ denotes the tangent bundle of $M$ and $\Gamma(TM)$ is the set of tangent (optionally smooth) vector fields on $M$. Thereby the parametrization method obtains the distribution of values of the respective parameter by finding values of $f$ that follows the most the tangent vector field $X$.

In examples, the candidate parameter $f$ belongs to a space that represents the space:

$$H_*^1(M) = \left\{ \varphi \in H^1(M) \mid \int_M \varphi \, \omega_g = 0 \right\},$$

where $H^1(M)$ is a Sobolev space of weakly differentiable functions on the skin portion M. In other words, $H^1(M)$ is the Sobolev space of (weakly) differentiable $L^2$ functions on M whose (weak) derivatives are also in $L^2$. df is the differential of f, thus df is a co-vector field. Further, $df^{\#}$ is the associated (via the metric tensor $g$) tangent vector field, is referred to as the gradient of $f$, and may be denoted by *grad f*, and may be written in coordinates as $(grad \, f)^i = g^{ij}(df)_j$. Such a choice for the space provides the uniqueness of the solution to the optimization problem. By "the parameter $f$ belongs

to a space that represents the space $H_*^1(M)$" it is meant that the parameter $f$ may belong to $H_*^1(M)$ and/or any

other space that approximates (i.e., proxies or discretizes) the space $H_*^1(M)$. Such a space may be a discrete space.

The discrete space is a finite-dimensional subspace of $H_*^1(M)$ used to approximate the space $H_*^1(M)$ (*i.e.*

by "discrete space" it is meant is a finite-dimensional subspace of $H_*^1(M)$ used to approximate the space $H_*^1(M)$) and being defined based on a span a finite number of piecewise polynomial (e.g., linear) functions defined on $M$.

In examples, the optimizing of the objective function includes finding an approximation of a solution of a Poisson's problem of the type:

$$\begin{cases} \Delta f = \nabla_\alpha X^\alpha & \text{in } M \\ \iota_{df^\#}(\omega_g) = \iota_X(\omega_g) & \text{on } \partial M \end{cases}$$

in $H^1_*(M)$, where $\partial M$ designates a boundary of the skin portion $M$, $\nabla_\alpha X^\alpha$ is a divergence of the vector field, $\iota_Y(\omega)$ is the interior product of a n-form $\omega \in \Omega^n(M)$ on $M$ for a vector field $Y \in \Gamma(TM)$, $TM$ being a tangent bundle of $M$, $\Gamma(TM)$ being a set of tangent and smooth vector fields on the skin portion $M$. Here, $\alpha$ is the index of summation, following the Einstein convention, as known per se in the field of in Riemannian geometry:

$$T^\alpha_\alpha = \sum_{\alpha=1}^n T^\alpha_\alpha$$

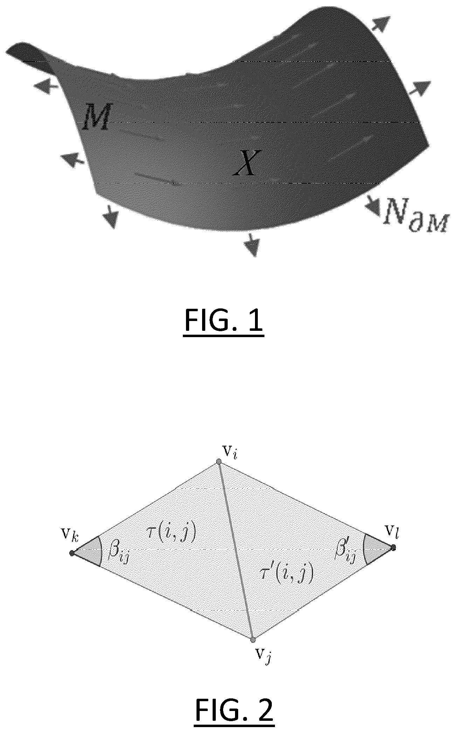

for any tensor (field) $T$. For example, as illustrated in FIG. 1, $\iota_Y(\omega_g)$ is a geometric version of "$X \cdot N_{\partial M}$" where $N_{\partial M}$ is the exterior normal (although substantially tangent to $M$) vector field of the boundary of $M$.

The optimization of the objective function by finding an approximation of the solution of the Poisson's problem provides a computationally efficient solution for the optimization problem and consequently the distribution of values of the respective parameter.

In examples, the skin portion is represented by a 3D discrete geometrical representation having discrete elements and the approximation of the solution of the Poisson's problem is in a discrete space representing $H^1_*(M)$. The 3D discrete geometrical representation may be a 3D surface mesh. In such cases, a parameterization of the mesh is equivalent to finding a value of each respective parameter (in $\mathbb{R}^2$) for each vertex of the mesh. The method may then comprise obtaining a value of each respective parameter on other points by interpolating of the value of the parameter on the vertices of the mesh. The interpolation may be a linear interpolation. The discrete space may be defined based on a span a finite number of piecewise polynomial functions defined on $M$.

In examples, the discrete space is of the type

$$V_* = \left\{ f \in V \mid \int_M f\, \omega = 0 \right\},$$

$$V = span\{\varphi_i : M \to \mathbb{R} \mid i \in [\![1, n]\!]\},$$

where n is a number of discrete elements of the discrete geometrical representation and each $\varphi_i$ is a continuous piecewise linear function on the skin portion $M$ associated with a discrete element $i$. Each $\varphi_i$ may be a finite element hat function associated to the discrete element $i$. In other words $\varphi_i(v_j) = \delta_{ij}$ for a particular vertex $v_j$ on $M$ associated to discrete element $j$ where $\delta_{ij}$ is the Kronecker delta function. The method may use an approximation of the vector field $X$. In particular examples, the method may compute piecewise constant values for the vector field $X$ on $M$. In examples where the 3D model is a 3D mesh, the discrete elements are in bijection (i.e., correspondence) with vertices of the 3D mesh, and the piecewise constant values of the vector field $X$ are in bijection (i.e., correspondence) with faces of the mesh, i.e., $X$ is assumed to be constant on each face of the mesh. In examples where the 3D model is a 3D point cloud, the 3D mesh may be obtained for example by triangulating the 3D point cloud as discussed above, then the piecewise constant values of the vector field $X$ may be piecewise constant as in the case of 3D mesh. Such a discrete space simplifies the optimizing of the objective function to solving a system of equations which is sparse, linear and symmetric Such systems of equations may be efficiently solved by the methods knowns in the field of numerical methods. The method thus improves the speed and the computational efficiency of parameterization as it allows computing the distribution of value of a respective parameter by solving a sparse symmetric linear system.

In examples, the distribution of material is arranged as an extrusion. An extrusion is a particular case of a sweep in which the guide curve is a straight axis, i.e., the axis of extrusion. In addition, the spine curve may be the same curve as the guide curve for an extrusion. Boundary of the extrusion (i.e., a "extrusion surface) results from sliding the profile along the extrusion axis. In particular examples, the profile curve is a planar (i.e., a 2D) curve that lies on a profile plane that is orthogonal to the extrusion axis. In such examples, the method further comprises providing an extrusion axis. The one or more vector fields comprise a vector field formed by a cross product between the extrusion axis and a normal to the skin portion axis. Such a vector field follows the boundary of the extrusion along the profile, i.e., follows a direction of the profile. Thereby the optimization, which tends to align the gradient of the parameter with the vector field, yields a parameterization that describes the boundary by following it along the profile. In such examples, values of the parameter increase along the profile. Thus, the method provides an improved parametrization of the extrusion surface in which the value of the parameter conveys an information about the extrusion. The vector field formed as such is tangent to the surface and orthogonal to the extrusion. In examples, the distribution of material is arranged as a revolution. A revolution is a particular case of a sweep in which the guide curve is (at least) a part of a circle. In addition, the spine curve may be the same curve as the guide curve for a revolution. In particular examples, the profile curve is a planar (i.e., a 2D) curve that lies on a profile plane. In such examples, the method further comprises providing a revolution axis. The one or more vector fields comprise a vector field formed by a cross product between the normal to the skin portion and a vector tangent to the skin portion along the trajectory, i.e., a vector tangent to the skin portion and parallel to a direction induced by the trajectory. Such a vector field follows the boundary of the revolution along the profile, thereby the optimization, which tends to align the gradient of the parameter with the vector field, yields a parameterization that describes the boundary by following it along the respective profile. In such examples, values of the parameter increase along the respective profile. The vector field may be unitary, i.e., divided by its norm.

The method may further comprise computing a profile of the sweep based on each determined distribution of values. The computing of a profile may comprise determining a distribution of values of one or more parameters. The profile computation may comprise computing a respective profile plane (for each vector field) and/or fitting one or more curves. The fitting of each curve may comprise solving a minimization problem. In such examples, the curve minimizes a distance between a reduction/projection of the skin portion on the respective profile plane (e.g., the projection of vertices of a 3D mesh when the CAD model is a 3D mesh and the projection of the points of a point cloud when the CAD model is a point cloud) and the curves are fitted based on the value of the parameter. The method may obtain each of such curves by searching in a space of curves defined on the profile plane. The method may obtain each curve by a regression method with an optional regularization. The regularization improves an interpolation quality of the solution such that it is not over-fitted. The regression may be solved according to any known method. By considering the values of the one or more parameters, the method provides an improved solution to fit the curves. The fitting of the curve (e.g., a profile or a guide curve) with a parameter obtained according to vector field is less ambiguous, more accurate and more faithful with respect to the geometry and topology of the boundary of the portion than fitting a curve on a point cloud in $\mathbb{R}^2$ (e.g., the set of the points obtained after the reduction step). In addition, finding the best fitting curve is an optimization problem, which may require an initialization (i.e., a first proposition of the curve) for the solving of the minimization problem, in particular if the solving the minimization problem is iterative. In such examples, the knowledge of the parameters determined by the method makes the fitting less sensitive to the quality of the initialization. In other words, the parameterization allows lighter computations and a fitting that is obtained faster as the fitting problem is easier to solve.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

For instance, the step of providing a CAD 3D model of the mechanical part may be triggered upon an action of the user. For example, the action may comprise importing, loading, or creating the CAD 3D model by the user. Similarly, the step of providing one or more vector fields may be triggered upon an action of the user. For example, the action may comprise inserting data defining each of the one or more vector fields.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

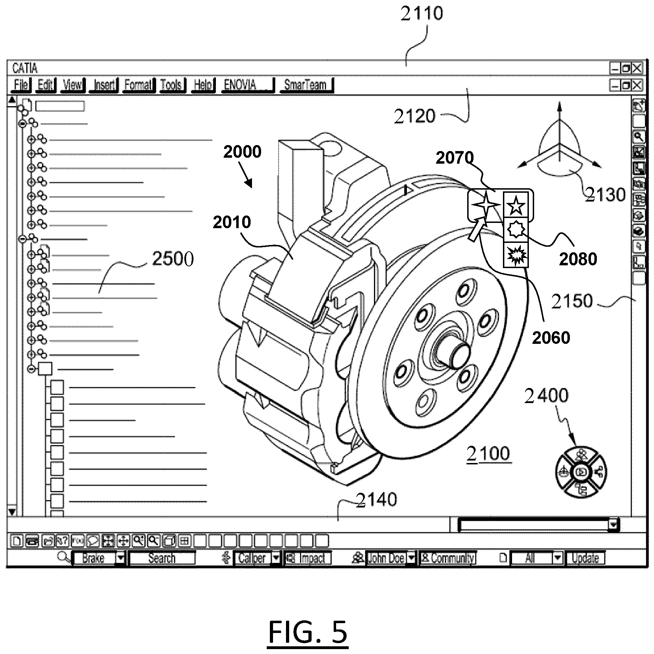

FIG. 5 shows an example of the GUI of the system, wherein the system is a CAD system. The model 2000 is an example of the CAD 3D model provided to the method. The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art.

Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of the modeled product 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed product 2000. In the example of the figure, the data 2500, displayed as a "feature-tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited product or render various attributes of the displayed product 2000. A cursor 2060 may be controlled by a haptic device to allow the user to interact with the graphic tools.

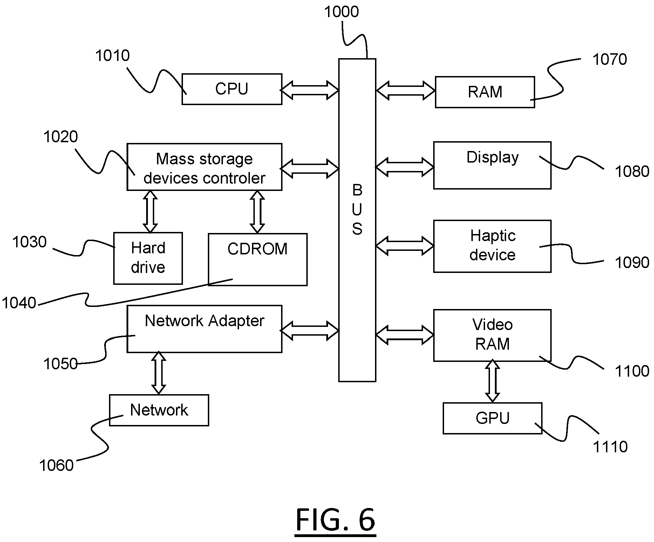

FIG. 6 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

Implementations of the method are now discussed.

The implementations build parameterization of surface meshes resulting from CAD features by taking advantage of the particularity of the geometry of those features to achieve an improved parameterization that follows natural directions. For example, in many cases, CAD features are built from a profile curve and/or a guide curve. However, data of such a profile/guide curve may not be included in a skin portion when the skin portion is a mesh. The implementations may compute (i.e., determine) a parameter on the mesh (e.g., a surface mesh) that grows along one of those curves to facilitate computing (an approximation of) the curve itself.

In particular, the implementations compute a parameter on the surface mesh that follows a given vector field on the mesh. If the mesh approximates the surface resulting from a CAD operator like an extrusion, a revolution, a fillet, a sweep, and if this vector field is a direction field obtained from relevant geometric information from the surface, the implementations may use the parameter to efficiently compute approximations of profile curve, guide curve, and/or fillet radius.

The computing of the parameter by the implementations is fast because it relies on solving a sparse symmetric linear system. Further, the computing is robust and works well with noisy, incomplete surfaces. The implementations further may fit a (profile, guide) curve using the computed parameter which improves the fitting.

In the implementations, providing the CAD 3D model representing a portion of a mechanical part comprises providing a 3D triangle mesh, $\mathcal{M}(\mathcal{V}, \mathcal{E}, \mathcal{T})$ in $\mathbb{R}^3$ to the method. In examples, the portion of the mechanical part is a strict sub-portion, and the mesh may be a sub-mesh of a larger mesh representing the whole mechanical part. In the mesh

$$\mathcal{M}(\mathcal{V}, \mathcal{E}, \mathcal{T}), \mathcal{V} = (v_i)_{1 \leq i \leq n} \in \mathbb{R}^{3 \times n}$$

is the set of vertices, $\varepsilon_B$ is the set of boundary edges and $\varepsilon_I$ the set of interior edges, and

$$\mathcal{E} = \mathcal{E}_B \sqcup \mathcal{E}_I$$

is the set of vertices. As illustrated in FIG. 2, when $(i,j) \in \varepsilon_I$, $\tau(i, j)$ and $\tau'(i, j)$ denote the two triangles of the mesh $\mathcal{M}$ adjacent to edge $(v_i, v_j)$ and when $(i,j) \in \varepsilon_B$, $\tau(i, j)$ denotes the only triangle adjacent to. edge $(v_i, v_j)$.

Let $(M, g)$ be a smooth oriented Riemannian manifold of dimension $d$ where $g$ is a metric tensor. For a differential manifold $M$, $T_pM$ denotes the tangent vector space at a point $p \in M$, $TM$ is the tangent bundle of $M$, $\Gamma(TM)$ denoted the set of tangent (smooth) vector fields on $M$, $\mathcal{F}$ (M) denotes the set of smooth functions on $M$ with values in $\mathbb{R}$, and $H^k(M)$ are the Sobolev spaces on $M$.

The implementations measure to which extent $f \in H^1(M)$ follows on $M$ by computing the following energy (i.e., a disparity/distance between the gradient of a candidate parameter $f$ and the vector field $X$):

$$\mathcal{J}(f) = \int_M |df^\# - X|_g^2 \, \omega_g$$

where $|\cdot|_g^2 = g(\cdot,\cdot)$, $\omega_g \in \Omega^d(M)$ is the canonical volume form on $(M, g)$ and $H^1(M)$ is the Sobolev space of (weakly) differentiable $L^2$ functions on $M$ whose (weak) derivatives are also $L^2$. Here $df$ is the differential of $f$, so it is a covector field, and $df^\#$ is the associated (via the metric tensor $g$) tangent vector field, sometimes referred to as the gradient of $f$, and denoted by $grad\ f$. In coordinates: $(grad\ f)^i = g^{ij}(df)_j$.

The implementations determine a distribution of values of a parameter $f$ that follows the most the tangent vector field $X$ by optimizing an objective function which rewards alignment of a gradient of a candidate parameter (denoted by $f$) with the vector field $X$ as

$$\min_{f \in H_*^1(M)} \mathcal{J}(f) \quad (OPT)$$

where $H_*^1(M) = \{\varphi \in H^1(M) \mid \int_M \varphi \, \omega_g = 0\}$. $H_*^1(M)$ is a more adequate space than $H^1(M)$ for this optimization as it provides uniqueness of the solution of the optimization problem:

- the differential $d$ is injective in $H_*^1(M)$. In fact $df_1 = df_2 \Rightarrow f_1 = f_2 + const$, however,

$$0 = \int_M f_1 \, \omega_g = \int_M (f_2 + const) \, \omega_g = const. \underbrace{vol_g(M)}_{\int_M \omega_g}$$

thus $f_1 = f_2$.

- And $Y \to \int_M |Y - X|_g^2 dvol_g$ is strictly convex.

According to classical variational techniques that solving the optimization problem (*OPT*) is equivalent to finding in $H_*^1(M)$ a weak solution to the Poisson problem:

$$\begin{cases} \Delta f = \nabla_\alpha X^\alpha & \text{in } M \\ \iota_{df^\#}(\omega_g) = \iota_X(\omega_g) & \text{on } \partial M \end{cases} \quad (EDP)$$

where $\iota_Y(\omega) \in \Omega^{n-1}(M)$ is the interior product of $\omega \in \Omega^n(M)$ with $Y \in \Gamma(TM)$.

In the implementations, $d = 2$ and $M \subset \mathbb{R}^3$ may be a piecewise linear approximation of a smooth surface/manifold associated with the mesh $\mathcal{M}$. The data of the vector field $X$ may be piecewise constant, with one tangent vector value $X_\tau$ per triangle $\tau$.

The implementation optimizes the objective function by finding an approximation of a solution of the Poisson's problem inside a restricted space $V_*$ of dimension $n$ - 1:

$$V_* = \left\{ f \in V \mid \int_M f \, \omega = 0 \right\}$$

$$V = span \{ \varphi_i : M \to \mathbb{R} \mid i \in [\![1, n]\!] \}$$

where $\varphi_i$ is the continuous piecewise linear function on $M$ such that $\varphi_i(v_j) = \delta_{ij}$, i.e., hat function as known in the field of finite element analysis. Here, $\omega$ is the volume form on $M$ induced by the canonical volume form on $\mathbb{R}^3$.

The implementations obtain the finite element approximation of the solution of the Poisson's problem (*EDP*) by solving the linear system:

$$\mathbf{A}x = \mathbf{M}y$$

where:

$$\mathbf{A} = \begin{bmatrix} \mathbf{L} & \mathbf{F} \\ \mathbf{F}^T & 0 \end{bmatrix}, \quad \mathbf{M} = \text{diag}(\mathcal{A}_1, \cdots, \mathcal{A}_n), \quad y = \begin{pmatrix} b - s \\ 0 \end{pmatrix}, \quad x = \begin{pmatrix} f \\ \lambda \end{pmatrix}.$$

L is the discrete Neumann Laplacian with the cotangent weights:

$$L_{ij} = \begin{cases} \frac{1}{2}\left(cotan\, \beta_{ij} + cotan\, \beta'_{ij}\right) & \text{if } (i,j) \in \mathcal{E}_I \\ 0 & \text{if } (i,j) \in \mathcal{E}_B \\ \displaystyle\sum_{k \neq i} L_{ik} & \text{if } i = j \end{cases}$$

$$F_i = \mathcal{A}_i = \frac{1}{3}\sum_{i \in \tau} \underbrace{\mathcal{A}_\tau}_{\text{area of }\tau \in \mathcal{T}} \,, \qquad b_i = \sum_{(i,j) \in \mathcal{E}_B} \left(X_{\tau(ij)} \times \left(v_j - v_i\right)\right) \cdot \mathrm{n}_{\tau(i,j)}$$

$$s_i = \frac{1}{2}\sum_{(i,j) \in \mathcal{E}_I} \left[cotan\left(\beta_{ij}\right)\left(v_j - v_i\right)\cdot X_{\tau(i,j)} + cotan\left(\beta'_{ij}\right)\left(v_j - v_i\right)\cdot X_{\tau'(i,j)}\right].$$

The $\mathrm{n}_{\tau(i,j)}$ is the normal vector of triangle $\tau(i, j)$ and f is the vector comprising values of the parameter on the vertices of the mesh.

The implementations solve for the distribution of value of parameter $f = \left(f_1, \cdots, f_n\right)^{\mathrm{T}} \in \mathbb{R}^{\mathrm{n}}$ by finding an approximation of the smooth parameter per vertex:

$$f_i \approx f(v_i)$$

The coefficient $\lambda \in \mathbb{R}$ is used to enforce the constraint $\int_M f\,\omega = 0$.

The obtained linear system of is sparse and symmetric, which makes it easy and fast to solve. The implementation then may obtain profile of the sweep based on the distribution of values $f$.

A particular implementation according to the discussed implementations may parametrize a general sweep defined by:

$$S(u,v) = \gamma(v) + R(v)p(u)$$

where $R(v) = Rot(\dot{\eta}(0), \dot{\eta}(v))$, $\gamma$ is the guide curve, $p$ is the profile curve, and $\eta$ is the spine curve. The profile curve is seen everywhere on the surface as it is rotated and translated according to the spine and the guide curves. The implementation comprises providing two vector fields $X_u$, $X_v$ representing the trajectory and the boundary of the sweep by representing the respective guide curve and the profile curve. For a general sweep, the vector field $X_u$ is nowhere zero and is tangent to the (translated and rotated) profile curve(s) everywhere. Further, the vector field $X_v$ is a nowhere null vector field satisfying:

$$\nabla_{X_v} X_u = 0$$

where V is the Levi-Civita connection on the surface with respect to the metric $g$. This means that the variation of $X_u$ in the direction $X_v$ is everywhere zero on the surface. In examples where the spine and the guide curves are the same and the profile plane is orthogonal to the tangent vector of the guide curve, i.e.,

$$\mathcal{P}_u \perp \dot{\gamma}(0)$$

(and thus

$$R(v)\mathcal{P}_u \perp \dot{\gamma}(v)),$$

it simply holds $X_v \perp X_u$ (where " $\perp$ " means orthogonal) while $X_v$ being nowhere zero. In other words, in these examples, the respective vector field of the guide curve $X_v$ is orthogonal to a tangent vector of the guide curve as well to a normal to the guide curve. The respective vector field of the guide curve $X_v$ is further orthogonal to the respective vector field of the profile curve $X_u$.

In examples, the principal directions of curvature may be used to compute the vector fields $X_u$ and $X_v$ aligned with said principal directions of curvature. In these examples, where the spine curve of the sweep is equal to the guide curve (i.e., the profile is rotated according to the guide curve) and the profile plane is orthogonal to the (initial) tangent vector of the profile, i.e.,

$$\mathcal{P}_u \perp \dot{\gamma}(0)$$

(and thus

$$R(v)\mathcal{P}_u \perp \dot{\gamma}(v)),$$

the vector fields may be obtained, for example, according to Knoppel et al., "Globally optimal direction fields", ACM Transactions on Graphics, 34(2), 2013, pp. 1-10, and Cohen-Steiner and Morvan, "Restricted delaunay triangulations and normal cycle", Proceedings of the nineteenth annual symposium on Computational geometry, 2003, pp. 312-32, which are incorporated herein by reference. The implementation then obtains two (distributions of) parameters, $(u, v)$ aligned with the parameters defining the sweep surface.

Each parameter is obtained by solving the respective optimization problem and the respective linear system.

Further, the implementation fits a split surface on the data using the parameters, i.e., computes both (approximations of) the guide curve and the profile curve. The guide curve is approximated by a curve among the set:

$$\mathcal{C}_v = \left\{ v \mapsto \sum_{k=1}^{K} \phi_k(v) \mathrm{q}_k^v \;\middle|\; \mathrm{q}_k^v \in \mathcal{P}_v \; \forall k \in [\![1, K]\!] \right\}$$

where $\mathcal{P}_v$ is the plane that is the closest to contain all the $X_v$, and for the profile curve among the set:

$$\mathcal{C}_u = \left\{ u \mapsto \sum_{k=1}^{N} \psi_k(u) \mathrm{q}_k^u \;\middle|\; \mathrm{q}_k^u \in \mathcal{P}_u \; \forall k \in [\![1, N]\!] \right\}$$

where $\mathcal{P}_u$ is the plane that is the closest to contain all the $X_u$. Here, $\phi_k : I \to \mathbb{R}$ $\psi_k : I \to \mathbb{R}$ are defined on

$I \subset \mathbb{R}$ and with values in $\mathbb{R}$ where $I = [f_1, f_n]$. Thus, for example, it holds that

$$\textstyle\sum_{k=1}^{K} \phi_k(v) q_k^v : I \to \mathcal{P}_v,$$

i.e., it is a curve in $\mathcal{P}_v$ .

Now the fitting can be done by solving an optimization problem of the form:

$$\min_{(q^u, q^v) \in \mathcal{P}_u^N \times \mathcal{P}_v^K} \sum_i \left| [\mathrm{F}q^v]_i + \mathbf{R}(q^v)_i [\mathbf{P}q^u]_i - \mathrm{v}_i \right|^2$$

where $[\mathbf{R}(q^v)_i]_{jk} = Rot([Sq^v]_0, [Sq^v]_i)_{jk}$, $[S]_{lm} = \dot{\phi}_m(v_l)$, $[F]_{kl} = \phi_l(v_k)$, and $[P]_{kl} = \psi_l(u_k)$.

Now particular implementations are discussed for two particular examples of sweep.

Example 1: Extrusion surface

Cases where the distribution of material is arranged as an extrusion along an extrusion axis

$$u_e \in \mathbb{R}^3 \ (|u_e| = 1)$$ are now discussed.

The implementation comprises providing a vector field a vector field formed by a cross product between the extrusion axis and a normal to the skin portion, i.e., $X = u_e \times n$. The vector field $X$ is unitary $X$ and satisfies $\nabla_\alpha X^\alpha = 0$. On each element (i.e., face) $\tau$ of the mesh $M$ a constant value of the vector field is set as: $X_\tau = u_e \times n_\tau$. Then, solving the linear system as discussed above finds a value of the parameter $f_i$ per vertex $v_i$.

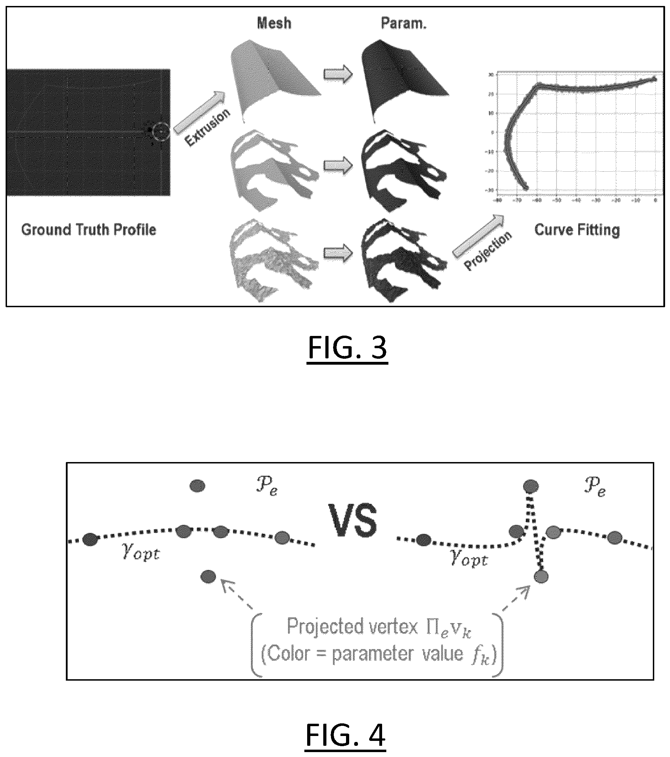

The implementation may further compute a profile of the extrusion based on the determined distribution of values of the parameter $f_i$ on the vertices $v_i$ of the mesh, and fits a curve that approximates the profile as illustrated in FIG. 3.

First, a reduction (i.e., projection) to the profile plane is computed. Given a direct orthonormal basis $(e_1, e_2, e_3)$

of $\mathbb{R}^3$ where $e_3 = u_e$ and

$$\mathcal{P}_e = span\{e_1, e_2\}$$

where $\mathcal{P}_e$ is the profile plane. The implementation computes a reduction as $\Pi_e : \mathbb{R}^3 \to \mathcal{P}_e$ by a respective matrix $[\Pi_e]_{\mathcal{B}, \mathcal{B}_e}$ with respect to the canonical basis $\mathcal{B}$ of $\mathbb{R}^3$ and the basis

$$\mathcal{B}_e = (e_1, e_2)$$

of $\mathcal{P}_e$ :

$$[\Pi_e]_{\mathcal{B}, \mathcal{B}_e} = \begin{bmatrix} e_1 \\ e_2 \end{bmatrix}$$

Second, the implementation fits a curve to the points of the profile plane that are the images of the vertices of the mesh through the reduction $\Pi_e$ using the computed parametrization f.

As illustrated on FIG. 4, the implementation considers computing a curve $\gamma$:

$$\gamma : I \to$$

$$\mathcal{P}_e \ (I = [f_1, f_n])$$

passing as close as possible to $\Pi_e v_i$ but only at time $t = f_i$ for all $i \in [\![ 1, n ]\!]$. The method may compute the curve by solving the following optimization problem:

$$\min_{\gamma \in \mathcal{C}} \frac{1}{2} \sum_i w_i |\gamma(f_i) - \Pi_e v_i|^2$$

where:

- 

$$w_i = \frac{\mathcal{A}_i}{\mathcal{A}_\mathcal{M}}$$

is the ratio of the area associated to the vertex *i* and the area of the mesh; and

- 

$$\mathcal{C} = \{ t \mapsto \sum_{k=1}^K \phi_k(t) q_k \mid q_k \in \mathcal{P}_e \ \forall k \in [\![1, K]\!] \}$$

where $(\phi_k)1 \leq k \leq K$ is a family of functions $I \to \mathbb{R}$, for example,

$$\phi_k(t) =$$

$$\mathcal{Z}^{-1} \exp\left(-\frac{|t - t_k|^2}{2\sigma^2}\right).$$

for $1 \leq k \leq K$ with *Z* a normalization constant and $(t_k)_{1 \leq k \leq K}$ uniformly spread on *I*.

The optimization problem then becomes the following regression:

$$\min_{q \in \mathbb{R}^{K \times 3}} \frac{1}{2} \|\mathbf{D}(\mathbf{F}q - p)\|^2$$

where $\|\cdot\|$ is the Frobenius norm,

$$D_{ij} = \sqrt{w_i} \delta_{ij}, \qquad F_{ik} = \phi_k(f_i), \qquad p = \begin{pmatrix} (\Pi_e v_1)^T \\ \vdots \\ (\Pi_e v_n)^T \end{pmatrix}.$$

The implementation adds a regularization term of the form $\sum_i \alpha_i |\gamma''(f_i)|^2$ to reward curves with smooth aspects as well as the ones that are close to be parameterized by arc length, which would be very coherent with the parameter *f* itself.

The optimization problem then becomes the following Ridge regression:

$$\min_{q \in \mathbb{R}^{K \times 3}} \frac{1}{2} \|\mathbf{D}(\mathbf{F}q - p)\|^2 + \frac{\alpha}{2} \|\mathbf{D}\mathbf{H}q\|^2$$

with $H_{ik} = \phi_k''(f_i).$ The analytical solution if the Ridge regression is

$$q_{opt} = (\mathbf{F}^T\mathbf{\Lambda}\mathbf{F} + \alpha\mathbf{H}^T\mathbf{\Lambda}\mathbf{H})^{-1}\mathbf{F}^T\mathbf{\Lambda}p$$

where $\Lambda = \mathbf{D}^2$ and by setting $\Phi(t) = (\phi_1(t), \cdots, \phi_K(t))^T$ the optimal curve is:

$$\gamma_{opt}: t \longmapsto q_{opt}\Phi(t).$$

Example 2: Revolution surface

Cases where the distribution of material is arranged as a revolution around an axis u $u \in \mathbb{R}^3 \ (|u| = 1)$ and center $c \in \mathbb{R}^3$ are now discussed.

The implementation comprises providing a vector field formed by a cross product between a normal to the skin portion and a vector tangent to the skin portion along the trajectory, i.e.,

$$X_p = (e_\theta)_p \times n_p$$

where $(e_\theta)_p = u \times \dfrac{(p-c)}{|p-c|}$ and $n_p$ is the value of the normal vector of $S$ at point $p$. The vector field $X$ is unitary and follows the profile direction.

A reduction (i.e., projection) reduction to the profile plane is computed in a similar manner to extrusion case using the map:

$$v \longmapsto \big(r(v), z(v)\big)$$

where ($r$, $\theta$, $z$) are the cylindrical coordinate with respect to the axis u and the center c. The implementation obtains the curve fitting of the profile as the extrusion case.

**Claims**

1. A computed-implemented method for parametrization of a computer-aided design (CAD) 3D model of a mechanical part including a portion having a distribution of material arranged as a sweep, the sweep having a trajectory and a boundary, the method comprising:

   - providing:

      • the 3D model, the 3D model including a skin portion representing an outer surface of the portion of the mechanical part; and
      • one or more vector fields, each vector field representing the boundary and/or the trajectory; and

   - for each vector field, determining a distribution of values of a respective parameter of the skin portion by optimizing an objective function which rewards alignment of a gradient of a candidate parameter with the vector field.

2. The method of claim 1, wherein the objective function rewards the alignment of the gradient of the candidate parameter with the vector field by penalizing a disparity between the gradient of the candidate parameter and the vector field.

3.

The method of claim 2, wherein the disparity is a distance $\left(\int_M |df^{\#} - X|_g^2\, \omega_g\right)$ between the gradient ($df^{\#}$) of the candidate parameter ($f$) and the vector field ($X$), the distance being based on a metric tensor ($g$).

4. The method of claim 3, wherein the objective function is of the type:

$$\mathcal{J}(f) = \int_M |df^{\#} - X|_g^2\, \omega_g$$

where $M$ is the skin portion, $X$ is a vector field, $f$ is the candidate parameter, $df^{\#}$ is the gradient of the candidate parameter, $\omega_g$ is a canonical volume form on the skin portion with respect to the metric tensor $g$, and $|df^{\#} - X|_g^2$ is the distance between the gradient $df^{\#}$ of the candidate parameter $f$ and the vector field $X$ with respect to the metric tensor $g$.

5. The method of claim 4, wherein the candidate parameter belongs to a space that represents the space:

$$H_*^1(M) = \left\{\varphi \in H^1(M) \mid \int_M \varphi\, \omega_g = 0\right\},$$

where $H^1(M)$ is a Sobolev space of weakly differentiable functions on the skin portion $M$.

6. The method of claim 5, wherein the optimizing of the objective function includes finding an approximation of a solution of a Poisson's problem of the type:

$$\begin{cases} \Delta f = \nabla_\alpha X^\alpha & \text{in } M \\ \iota_{df^{\#}}(\omega_g) = \iota_X(\omega_g) & \text{on } \partial M \end{cases}$$

in $H_*^1(M)$, where $\partial M$ designates a boundary of the skin portion $M$, $\nabla_\alpha X^\alpha$ is a divergence of the vector field, $\iota_Y(\omega)$ is the interior product of a n-form $\omega \in \Omega^n(M)$ on $M$ for a vector field $Y \in \Gamma(TM)$, $TM$ being a tangent bundle of $M$, $\Gamma(TM)$ being a set of tangent and smooth vector fields on the skin portion $M$.

7. The method of claim 6, wherein the skin portion is represented by a 3D discrete geometrical representation having discrete elements and the approximation of the solution of the Poisson's problem is in a discrete space representing $H_*^1(M)$.

8. The method of claim 7, wherein the discrete space is of the type

$$V_* = \left\{f \in V \mid \int_M f\, \omega = 0\right\},$$

$$V = span\left\{\varphi_i : M \to \mathbb{R} \mid i \in [\![1, n]\!]\right\},$$

where n is a number of discrete elements of the discrete geometrical representation and each $\varphi_i$ is a continuous piecewise linear function on the skin portion $M$ associated with a discrete element $i$.

9. The method of any one of claims 1 to 8, wherein the one or more vector fields comprise several vector fields all aligned with principal curvature directions of the skin portion.

10. The method of any of claims 1 to 9, wherein the distribution of material is arranged as an extrusion and the method further comprises providing an extrusion axis, the one or more vector fields comprising a vector field formed by a cross product between the extrusion axis and a normal to the skin portion.

11. The method of any claims 1 to 9, wherein the distribution of material is arranged as a revolution and the method further comprises providing a revolution axis, the one or more vector fields comprising a vector field formed by a cross product between a normal to the skin portion and a vector tangent to the skin portion along the trajectory.

12. The method of any of claims 1 to 11, wherein the method further comprises computing a profile of the sweep based on each determined distribution of values.

13. A computer program comprising instructions for performing the method according to any one of claims 1 to 12.

14. A computer readable storage medium having recorded thereon the computer program of claim 13.

15. A system comprising a processor coupled to a memory, the memory having recorded thereon the computer program of claim 13.

FIG. 1

FIG. 2

## FIG. 3

## FIG. 4

FIG. 5

1000

1010

CPU

1070

RAM

1020

Mass storage
devices controler

Display

1080

B
U
S

Haptic
device

1090

1030

Hard
drive

CDROM

1040

Video
RAM

Network Adapter

1100

1050

Network

GPU

1060

1110

## FIG. 6

Europäisches
Patentamt

European
Patent Office

Office européen
des brevets

## EUROPEAN SEARCH REPORT

Application Number

EP 21 30 5671

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/018634 A1 (BAE SEOCK HOON [KR] ET AL) 17 January 2013 (2013-01-17) * abstract * * paragraph [0041] * * paragraph [0064] * * paragraph [0066] * * figures 2-6 * | 1-15 | INV. G06F30/17 G06K9/00 G06T17/10 |
| X | US 2020/151286 A1 (WILLIS KARL DARCY DANIEL [US] ET AL) 14 May 2020 (2020-05-14) * abstract * * paragraph [0053] * * paragraph [0072] * * paragraph [0106] * * paragraph [0167] * * paragraph [0169] * * paragraph [0179] * * figure 12 * | 1-15 | |
| A | CHUANG J-H ET AL: "A potential-based generalized cylinder representation", COMPUTERS AND GRAPHICS, ELSEVIER, GB, vol. 28, no. 6, 1 December 2004 (2004-12-01), pages 907-918, XP004615306, ISSN: 0097-8493, DOI: 10.1016/J.CAG.2004.08.004 * abstract * * page 915, column 2, paragraph 2; figures 19,20 * * page 916, column 2, paragraph 1 - page 917, column 1, paragraph 1; figures 23-24 * | 1-15 | TECHNICAL FIELDS SEARCHED (IPC) G06F G06K G06T |

-/--

The present search report has been drawn up for all claims

| Place of search | Date of completion of the search | Examiner |
|---|---|---|
| Munich | 28 October 2021 | Sohrt, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

Application Number

EP 21 30 5671

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2019/087032 A1 (UNIV DEGLI STUDI DI FIRENZE [IT]) 9 May 2019 (2019-05-09)<br>* abstract *<br>* paragraph [0072] *<br>* figures 1,2,4,5 *<br>----- | 1-15 | |

TECHNICAL FIELDS SEARCHED (IPC)

The present search report has been drawn up for all claims

| Place of search | Date of completion of the search | Examiner |
|---|---|---|
| Munich | 28 October 2021 | Sohrt, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 5671

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2021

| Patent document cited in search report | | Publication date | Patent family member(s) | Publication date |
|---|---|---|---|---|
| US 2013018634 | A1 | 17-01-2013 | CN 102880731 A<br>DE 102011085531 A1<br>JP 5431436 B2<br>JP 2013020603 A<br>KR 20130008753 A<br>US 2013018634 A1 | 16-01-2013<br>17-01-2013<br>05-03-2014<br>31-01-2013<br>23-01-2013<br>17-01-2013 |
| US 2020151286 | A1 | 14-05-2020 | CN 113366481 A<br>EP 3877889 A2<br>US 2020151286 A1<br>WO 2020097578 A2 | 07-09-2021<br>15-09-2021<br>14-05-2020<br>14-05-2020 |
| WO 2019087032 | A1 | 09-05-2019 | NONE | |

EPO FORM P0459

For more details about this annex : see Official Journal of the European Patent Office, No. 12/82

**REFERENCES CITED IN THE DESCRIPTION**

**Non-patent literature cited in the description**

- **LEVY et al.** Least Squares Conformal Maps for Automatic Texture Atlas Generation. *ACM Transactions on Graphics (TOG),* 2002, vol. 21 (3), 362-371
- Spectral Conformal Parameterization. **MULLEN et al.** Computer Graphics Forum. Wiley, 2008, vol. 27, 1487-1494
- **P. BENKO et al.** Algorithm for reverse engineering boundary representation models. *Computer-Aided Design,* 2001, vol. 33, 839-851
- **A. TUMANIN.** *Polygonal Mesh to B-Rep Solid Conversion: Algorithm Details and C++ Code Samples,* 04 September 2019

- **BÉNIÈRE et al.** Recovering Primitives in 3D CAD meshes. *Proceedings of SPIE,* 2011
- **KAISER A. et al.** A survey of Simple Geometric Primitives Detection Methods for Captured 3D data. *Computer Graphics Forum,* 2018
- **KNOPPEL et al.** Globally optimal direction fields. *ACM Transactions on Graphics,* 2013, vol. 34 (2), 1-10
- **COHEN-STEINER ; MORVAN.** Restricted delaunay triangulations and normal cycle. *Proceedings of the nineteenth annual symposium on Computational geometry,* 2003, 312-32